# EUROPEAN PATENT APPLICATION

(11) **EP 4 712 315 A1**
(43) Date of publication of application: **18.03.2026**
(21) Application number: 24802871.4
(22) Date of filing: 30.04.2024
(51) Int. Cl.: H02K 5/10, A47L 11/30

(54) **ELECTRIC MOTOR ASSEMBLY AND SURFACE CLEANING APPARATUS**

(30) Priority: 06.05.2023 CN 202310505498
(71) Applicant: Shenzhen Roborock Innovation Technology Co., Ltd., Shenzhen, Guangdong 518000 (CN)
(72) Inventor: LI, Xing, Shenzhen, Guangdong 518000 (CN); LIANG, Binxiong, Shenzhen, Guangdong 518000 (CN); DU, Shoupeng, Shenzhen, Guangdong 518000 (CN); WEI, Xianzhi, Shenzhen, Guangdong 518000 (CN); ZHANG, Liangzhou, Shenzhen, Guangdong 518000 (CN)
(74) Representative: advotec.
(86) International application number: PCT/CN2024/090833
(87) International publication number: WO 2024/230589

(57) **Abstract**

Disclosed in the embodiments of the present disclosure are an electric motor assembly and a surface cleaning apparatus. The electric motor assembly comprises: a shell, which comprises an air outlet and a water outlet; an electric motor body, which is arranged inside the shell and is configured to provide working power; and a cyclone bracket, which is arranged between the electric motor body and the shell and is configured to guide working airflow, wherein the cyclone bracket, the electric motor body and the shell are approximately arranged in a coaxial manner; the working airflow carrying moisture is discharged from the electric motor body, then flows through the cyclone bracket, and is condensed into liquid on an inner side wall of the shell, and finally the liquid is discharged from the water outlet; and the working airflow which is not condensed into liquid is discharged from the air outlet. The electric motor assembly provided in the embodiments of the present disclosure is provided with a water discharge path and an air discharge path, such that the working airflow entering the fan can be subjected to water-air separation; and the air and water are simultaneously discharged from the electric motor assembly, such that the use of the electric motor assembly is optimized.

## Description

The present application claims priority to the Chinese patent application No. CN202310505498.6, filed with Chinese Patent Office on May 6, 2023 and entitled "MOTOR ASSEMBLY AND SURFACE CLEANING DEVICE", which is incorporated herein by reference in its entirety.

### TECHNICAL FIELD

The present disclosure relates to the field of surface cleaning device technologies, and more particularly to a motor assembly and a surface cleaning device.

### BACKGROUND ART

With the advancement of science and technology in recent years, a variety of cleaning devices have emerged, reducing the burden of people's work in cleaning and sweeping, meeting people's needs, and providing great convenience to people's lives.

A wet cleaning device often requires a fan to suck in wastewater produced in cleaning. During a suction process, water vapor may enter a motor assembly along with an airflow. If not discharged promptly, the water vapor may contaminate a housing and adversely affect the appearance of the motor assembly, and may even lead to wastewater accumulating inside the housing, causing an unpleasant odor over time. In addition, the fan generates significant noise during the suction process, impairing the user experience.

### SUMMARY OF THE APPLICATION

An object of the present disclosure is to provide a motor assembly and a surface cleaning device, which are capable of promptly discharging water vapor entering a motor assembly.

Embodiments of the present disclosure provide a motor assembly, including:
a housing, the housing including an air outlet and a water outlet;
a motor body, arranged inside the housing and configured to provide working power; and
a cyclone bracket, arranged between the motor body and the housing and configured to guide a working airflow,
wherein the cyclone bracket, the motor body and the housing are substantially coaxially arranged; and after being discharged from the motor body, the working airflow carrying water vapor is condensed into liquid on an inner side wall of the housing through the cyclone bracket and then the liquid is discharged from the water outlet, while the working airflow not condensed into the liquid is discharged from the air outlet.

In some embodiments, the cyclone bracket includes:
bracket vanes, spirally arranged around a central axis of the cyclone bracket and configured to enable the working airflow to be discharged through a gap between the bracket vanes.

In some embodiments, the bracket vanes include a single-layer vane and a double-layer vane, the single-layer vane and the double-layer vane being arranged alternately.

In some embodiments, the cyclone bracket further includes:
a water gathering trough, arranged around an edge of the cyclone bracket and configured to collect the liquid condensed on the inner side wall of the housing.

In some embodiments, an edge of the water gathering trough is sealed against the inner side wall of the housing.

In some embodiments, the cyclone bracket further includes:
a water outlet hole, formed in the water gathering trough and configured to guide the liquid within the water gathering trough to the water outlet.

In some embodiments, the motor assembly further includes:
a first noise-reducing mesh plate, arranged on the cyclone bracket and surrounding an outer side of the bracket vanes; and
a second noise-reducing mesh plate, arranged on a side of the cyclone bracket away from the bracket vanes.

In some embodiments, the first noise-reducing mesh plate and the second noise-reducing mesh plate are both cylindrical, and a diameter of the second noise-reducing mesh plate is smaller than a diameter of the first noise-reducing mesh plate.

In some embodiments, the motor assembly further includes:
a first noise-reducing cavity, located between an outer side wall of the cyclone bracket and the first noise-reducing mesh plate, and configured to reduce noise of the working airflow between the outer side wall of the cyclone bracket and the first noise-reducing mesh plate.

In some embodiments, the motor assembly further includes:
a second noise-reducing cavity, located between the inner side wall of the housing and the first noise-reducing mesh plate, and configured to reduce noise of the working airflow between the inner side wall of the housing and the first noise-reducing mesh plate.

In some embodiments, the motor assembly further includes:
a third noise-reducing cavity, located between an outer side wall of the cyclone bracket and the second noise-reducing mesh plate, and configured to reduce noise of the working airflow between the outer side wall of the cyclone bracket and the second noise-reducing mesh plate.

In some embodiments, the motor assembly further includes:
a fourth noise-reducing cavity, located between the inner side wall of the housing and the second noise-reducing mesh plate, and configured to reduce noise of the working airflow between the inner side wall of the housing and the second noise-reducing mesh plate.

In some embodiments, after being discharged from the motor body, the working airflow carrying the water vapor is spirally blown out through a gap between bracket vanes of the cyclone bracket and condensed into liquid on the inner side wall of the housing, and the liquid is gathered by a water gathering trough and guided from a water outlet hole of the water gathering trough to the water outlet to be discharged.

In some embodiments, after being discharged from the motor body, the working airflow is spirally blown out through the cyclone bracket, passes through the first noise - reducing mesh plate, then returns to the first noise-reducing mesh plate, and is discharged from the air outlet.

In some embodiments, after being discharged from the motor body, the working airflow is spirally blown out through the cyclone bracket, passes through a first noise-reducing mesh plate, then returns to an inner side of the first noise-reducing mesh plate and enters an inner side of a second noise-reducing mesh plate, then is blown out from the second noise-reducing mesh plate, and is discharged from the air outlet.

In some embodiments, the air outlet is located on a side surface of the housing, and the water outlet is located on a bottom surface of the housing.

The embodiments of the present disclosure provide a surface cleaning device, including the motor assembly according to any one of the above embodiments.

### BRIEF DESCRIPTION OF THE DRAWINGS

The accompanying drawings herein, which are incorporated in the Description and constitute a part of the Description, show embodiments conforming to the present disclosure, and are used to explain the principles of the present disclosure together with the Description. Apparently, the accompanying drawings in the following description show only some embodiments of the present disclosure, and a person of ordinary skill in the art may still derive other drawings from these accompanying drawings without creative efforts. In the accompanying drawings:
FIG. 1 is a schematic overall structural diagram of a motor assembly according to some embodiments of the present disclosure;
FIG. 2 is a schematic partial cross-sectional structural diagram of a motor assembly according to some embodiments of the present disclosure;
FIG. 3 is a schematic perspective structural diagram of a cyclone bracket according to some embodiments of the present disclosure;
FIG. 3a is a schematic perspective structural diagram of a cyclone bracket from another angle according to some embodiments of the present disclosure;
FIG. 3b is a schematic perspective structural diagram of a cyclone bracket from another angle according to some embodiments of the present disclosure;
FIG. 4 is a schematic structural diagram of noise-reducing cavities of a motor assembly according to some embodiments of the present disclosure;
FIG. 5 is a schematic structural diagram of a water flow path of a motor assembly according to some embodiments of the present disclosure;
FIG. 6 is a schematic structural diagram of an airflow path of a motor assembly according to some embodiments of the present disclosure; and
FIG. 7 is a schematic structural diagram of an airflow path of a motor assembly according to other embodiments of the present disclosure.

Description of reference numerals:
motor assembly 100, housing 10, air outlet 11, water outlet 12, motor body 20, air inlet 21, air vent 22, cyclone bracket 40, bracket vane 41, first guiding surface 411, second guiding surface 412, third guiding surface 413, water gathering trough 42, water outlet hole 43, water outlet pipe 44, central through hole 45, positioning column 46, first noise-reducing mesh plate 30, second noise-reducing mesh plate 50, first noise-reducing cavity 110, second noise-reducing cavity 120, third noise-reducing cavity 130, fourth noise-reducing cavity 140.

### DETAILED DESCRIPTION

To make the objectives, technical solutions and advantages of the present disclosure clearer, the present disclosure will be further described in detail below with reference to the accompanying drawings. It is obvious that the described embodiments are only part but not all of the embodiments of the present disclosure. All other embodiments obtained by those ordinary skilled in the art without creative efforts based on the embodiments in the present disclosure are within the protection scope of the present disclosure.

The terms used in the embodiments of the present disclosure are for the purpose of describing particular embodiments only and are not intended to limit the present disclosure. The singular forms "a/an", "the" and "said" used in the embodiments of the present disclosure and the appended claims are intended to include the plural forms as well, unless the context clearly indicates otherwise. The term "a plurality of" generally means at least two.

It should be understood that the term "and/or" used herein merely describes an association relationship of associated objects, and indicates that there may be three relationships. For example, A and/or B may indicate three cases: A exists separately, A and B exist at the same time, and B exists separately. In addition, the character "/" herein generally indicates an "or" relationship between the contextual objects.

It should be understood that although terms such as "first", "second" and "third" may be used in the embodiments of the present disclosure to describe certain elements, these elements should not be limited by these terms. These terms are only used for distinguishing. For example, without departing from the scope of the embodiments of the present disclosure, a "first" element may also be referred to as a "second" element, and similarly, a "second" element may be referred to as a "first" element.

Furthermore, it should be noted that the terms "comprising", "including" or any variations thereof are intended to cover non-exclusive inclusion, such that a product or device including a series of elements not only includes those explicitly listed but may also encompass other unlisted elements or inherent elements of such a product or device. Without more limitations, the element defined by the phrase "including a" does not exclude the existence of other same elements in the product or device including the element.

The optional embodiments of the present disclosure will be described in detail below with reference to the accompanying drawings.

A main machine assembly of a surface cleaning device provides suction power for an operation of the cleaning device, and a working airflow will enter the main machine assembly and is then discharged. During this process, some water vapor may enter the main machine assembly along with the working airflow. In the related art, the water vapor can be discharged along with the working airflow from an air outlet of the main machine assembly. However, sometimes, the water vapor cannot be completely discharged, causing the remaining water vapor to accumulate in the interior of the main machine assembly. As a result, the prolonged accumulation of such water vapor may shorten the service life of the main machine assembly.

Embodiments of the present disclosure provide a motor assembly. The motor assembly includes: a housing, the housing including an air outlet and a water outlet; a motor body, arranged inside the housing and configured to provide working power; and a cyclone bracket, arranged between the motor body and the housing and configured to guide a working airflow, wherein the cyclone bracket, the motor body and the housing are substantially coaxially arranged; and after being discharged from the motor body, the working airflow carrying water vapor is condensed into liquid on an inner side wall of the housing through the cyclone bracket and then the liquid is discharged from the water outlet, while the working airflow not condensed into the liquid is discharged from the air outlet.

By arranging the cyclone bracket for the motor assembly provided by the embodiments of the present disclosure, after being guided by the cyclone bracket, a water-containing gas discharged from the motor body forms a swirling airflow. Through cyclone separation inside the motor assembly, a water-air separation effect is further enhanced, such that most of the water vapor can condense on the inner side wall of the housing and then the condensed liquid flows out from the water outlet, thereby reducing the proportion of water content in the gas discharged from the air outlet.

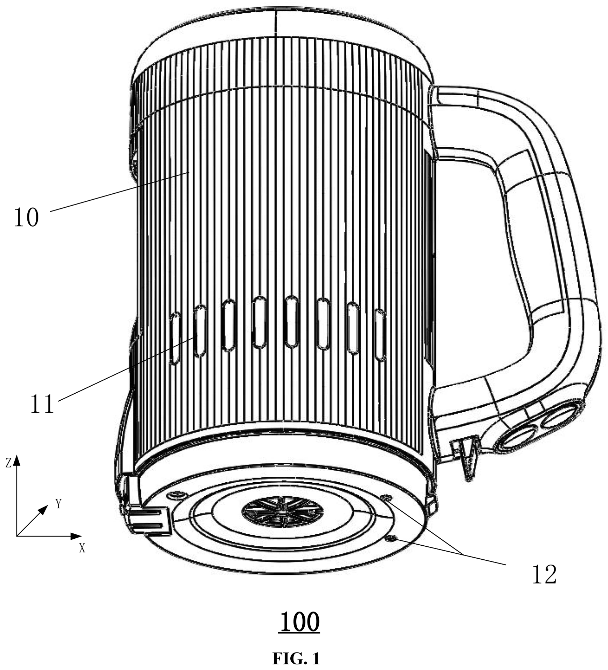

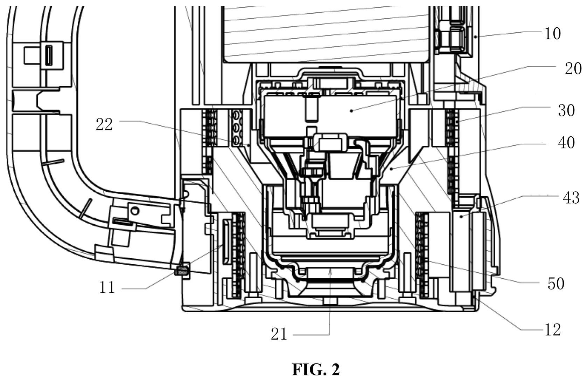

Specifically, the embodiments of the present disclosure provide a motor assembly. As an example, FIG. 1 is a schematic overall structural diagram of a motor assembly according to some embodiments of the present disclosure; and FIG. 2 is a schematic partial cross-sectional structural diagram of a motor assembly according to some embodiments of the present disclosure.

In order to describe behaviors of the motor assembly more clearly, the following directions are defined as shown in FIG. 1: the motor assembly may be calibrated using three mutually perpendicular axes defined as follows: a transversal axis Y, a front-rear axis X and a center vertical axis Z. The central vertical axis Z is in the direction of the central axis M of the motor assembly. The direction perpendicular to the axis is the radial direction located in the XY plane. The direction opposite to the arrow along the front-rear axis X is designated as the "rearward direction", while the direction of the arrow along the front-rear axis X is designated as the "forward direction". The direction of the arrow along the transverse axis Y is the "left side" of the motor assembly, while the direction opposite to the arrow along the transverse axis Y is the "right side" of the motor assembly. The vertical axis Z is in the direction extending upward from the bottom surface of the motor assembly. The direction of the arrow along the vertical axis Z is the "upper side" of the motor assembly, while the direction opposite to the arrow along the vertical axis Z is the "lower side" of the motor assembly.

Specifically, as shown in FIGs. 1 and 2, the embodiments of the present disclosure provide a motor assembly 100. The motor assembly 100 is configured to provide power for cleaning operations. The motor assembly 100 includes a housing 10. The housing 10 may be columnar, such as cylindrical. The housing 10 includes air outlets 11 and water outlets 12. The air outlets 11 are configured to discharge a working airflow, and the water outlets 12 are configured to discharge a water flow formed by the condensation of water vapor contained in the working airflow. The motor assembly 100 further includes a motor body 20. The motor body 20 is arranged inside the housing 10. The motor body 20 is configured to provide suction power. The motor body 20 has an air inlet 21 and an air vent 22. The motor assembly 100 further includes a cyclone bracket 40. The cyclone bracket 40 is arranged between the motor body 20 and the housing 10. The cyclone bracket 40 is configured to guide the working airflow. The cyclone bracket 40, the motor body 20 and the housing 10 are substantially coaxially arranged. That is, central axes of all the cyclone bracket 40, the motor body 20 and the housing 10 are substantially coincident along the Z-direction central axis M. The working airflow carrying water vapor discharged from the motor body 20 forms a swirling airflow through the cyclone bracket 40. The water vapor is condensed into liquid on the inner side wall of the housing 10 and then the liquid is discharged from the water outlets 12, while the working airflow with the water vapor removed is discharged from the air outlets 11. The provided cyclone bracket enables effective water-air separation through cyclone separation, such that most of the water vapor can be condensed on the inner side wall of the housing. The condensed water can be promptly discharged from the water outlets, such that the interior of the motor assembly can be substantially kept in a state of no residual water all the time, thereby prolonging the service life of the motor assembly, and preventing wastewater from being discharged from the air outlets and avoiding pollution to the environment.

In some embodiments, as shown in FIG. 1, the air outlets 11 of the housing 10 are located on the side surface of the housing. Optionally, each air outlet 11 is positioned at a predetermined height above the bottom surface of the housing 10, for example, at 1/3 of the height of the housing, thereby preventing impurities from entering the housing due to an excessively low height of the air outlet. In addition, the water outlets 12 are located on the bottom surface of the housing 10, such that water can flow out from the water outlets 12 on the bottom surface of the housing, thereby avoiding water accumulation within the housing. A plurality of air outlets 11 is provided. Each air outlet 11 is of a strip-shaped structure extending substantially axially, such as rectangular, racetrack-shaped, elliptical, etc. The strip-shaped air outlets are consistent with the flow direction of the working airflow, which is more conducive to discharging the airflow.

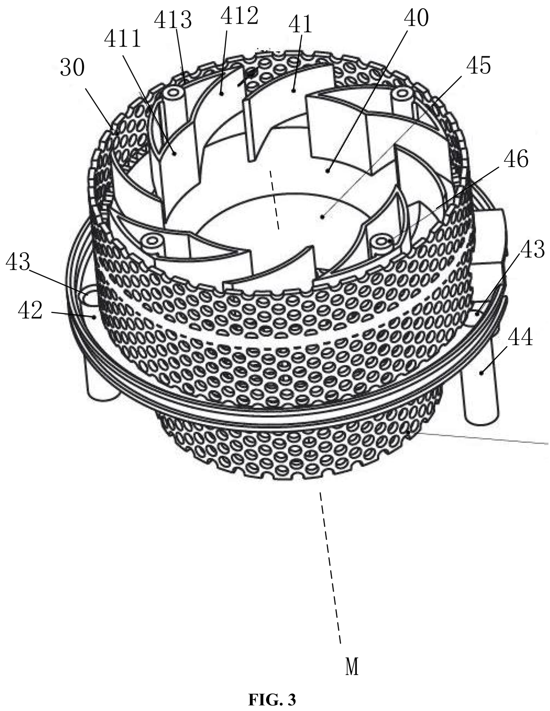

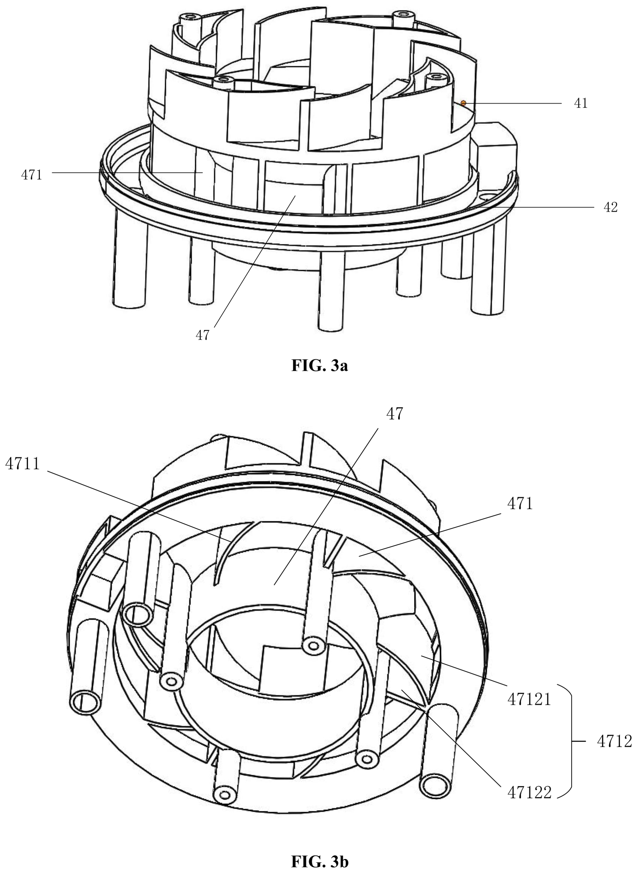

In some embodiments, as shown in FIG. 3, the cyclone bracket 40 is arranged inside the housing 10 of the motor assembly 100, and is configured to support not only the motor body 20 but also a first noise-reducing mesh plate 30 and a second noise-reducing mesh plate 50. Specifically, the cyclone bracket 40 includes a central through hole 45. The center of the central through hole 45 is located on the central axis M of the cyclone bracket 40. The central through hole 45 is configured to accommodate the motor body 20. The cyclone bracket 40 further includes bracket vanes 41. The bracket vanes 41 are spirally arranged around the central axis M of the cyclone bracket 40 and arranged on the upper side of the cyclone bracket 40. The bracket vanes 41 are configured to enable the working airflow to be discharged through gaps between the bracket vanes 41. The bracket vanes 41 are spiral-shaped, and the trajectory of the outer contour line of the bracket vanes 41 is substantially a circle centered on the central axis M of the cyclone bracket 40. The working airflow enters from the air inlets 21 of the motor body 20 and exits from the air vents 22. Due to the rotation of the motor body, the working airflow exiting from the air vents 22 is substantially a spiral airflow. The spiral airflow rotates along the top end of the central through hole 45 and is guided by the spiral bracket vanes 41, and then is smoothly discharged through the gaps between the bracket vanes 41, thereby reducing resistance during the process of guiding the airflow out, lowering airflow noise, and reducing the power consumption of the motor body. Moreover, while guiding the airflow to reduce the resistance, the bracket vanes 41 also achieve a rectifying effect on the airflow, such that the sound directivity is increased, thereby enhancing the noise reduction effect to some extent when the airflow subsequently passes through noise-reducing cavities.

In some embodiments, as shown in FIG. 3, the bracket vanes 41 include single-layer vanes and double-layer vanes. The single-layer vanes and double-layer vanes are arranged alternately to form the gaps for guiding the working airflow. Each single-layer vane is configured in an arc shape and spirally arranged on the upper side of the cyclone bracket 40. Each double-layer vane includes a first guiding surface 411, a second guiding surface 412 and a third guiding surface 413. The first guiding surface 411, the second guiding surface 412 and the third guiding surface 413 are connected end to end to form the double-layer vane. The first guiding surface 411 and the second guiding surface 412 are substantially located on the same side of the double-layer vane, and the third guiding surface 413 constitutes the other side surface of the double-layer vane. The curvature of the first guiding surface 411 is substantially the same as that of the central through hole 45, and the first guiding surface 411 is basically oriented toward the central axis M. The first guiding surface 411 is configured to guide the working airflow exiting from the air vents 22 of the motor body to the second guiding surface 412. The radius of curvature of the second guiding surface 412 is substantially the same as that of the corresponding single-layer vane, and the second guiding surface 412 is arranged substantially parallel to the single-layer vane to form a gap, enabling the working airflow to be guided out through this gap. The third guiding surface 413 is connected to the ends of both the first guiding surface 411 and the second guiding surface 412 to form a closed double-layer vane. The third guiding surface 413 also forms a gap with the single-layer vane, enabling the working airflow to be guided out through this gap. Optionally, a positioning column 46 extending along the direction of the central axis M is further arranged on the third guiding surface 413, and is configured to fix the cyclone bracket 40 inside the housing 10.

In some embodiments, as shown in FIG. 3, the cyclone bracket 40 further includes a water gathering trough 42. The water gathering trough 42 is arranged around the edge of the cyclone bracket 40 and configured to collect the liquid condensed on the inner side wall of the housing 10. The water gathering trough 42 has an upwardly protruding outer edge located outside the outer ends of the bracket vanes 41. Thus, the water gathering trough 42 is formed between the outer edge of the water gathering trough 42 and the outer ends of the bracket vanes 41. The water gathering trough 42 collects the liquid slowly condensing on the inner side wall of the housing 10, preventing the liquid from flowing into the interior of the housing through a slit in the inner side wall, which could otherwise damage electronic components inside the housing or cause wastewater accumulation.

In some embodiments, the outer edge of the water gathering trough 42 is sealed against the inner side wall of the housing 10. For example, a groove is formed on the side surface of the outer edge of the water gathering trough 42, and a sealing strip is provided in the groove for sealing. This arrangement prevents liquid from flowing into the housing through the slit in the inner side wall, which could otherwise damage electronic components inside the housing or cause wastewater accumulation.

In some embodiments, the cyclone bracket 40 further includes water outlet holes 43. The water outlet holes 43 are formed in the water gathering trough 42, and are configured to guide the liquid within the water gathering trough 42 to the water outlets 12. Optionally, the water outlet holes 43 guide the liquid out through water outlet pipes 44. The number of water outlet holes 43 may be 1 to 6, for example, 2, 3, or 4.

In some embodiments, as shown in FIG. 3a, a central sleeve 47 is further arranged at the lower side of the cyclone bracket 40. The central sleeve 47 is cylindrical. A through hole formed in the middle of the central sleeve 47 constitutes part of the central through hole 45. Moreover, the central axis of the central sleeve 47 coincides with the central axis M of the cyclone bracket 40. The central sleeve 47 extends upward from bottom to the upper side of the water gathering trough 42 and abuts against the lower surface of the end face where the bracket vanes 41 are located. The central sleeve 47 is configured to accommodate the air inlet end of the motor body 20. As shown in FIG. 3b, sleeve vanes 471 are arranged between the outer side of the central sleeve 47 and the water gathering trough 42. The sleeve vanes 471 include first vanes 4711 and second vanes 4712. The first vane 4711 and the second vane 4712 may be of a single-layer structure and a double-layer structure, respectively. The first vanes 4711 and the second vanes 4712 may be arranged alternately to form gaps for guiding the working airflow. The first vane 4711 is configured in an arc shape and spirally arranged around the outer side of the central sleeve 47. The second vane 4712 includes a fourth guiding surface 47121 and a fifth guiding surface 47122, both of which are also curved surfaces. After the working airflow is blown out through the bracket vanes 41, the airflow reflected back by the housing enters the lower side of the cyclone bracket 40 through the gaps between the sleeve vanes 471 at the upper side of the water gathering trough 42, and then flows downward along the central sleeve 47 and is discharged from the air outlets. Optionally, a positioning column extending along the direction of the central axis M is further arranged on the second vane 4712, and is configured to fix the cyclone bracket inside the housing.

In some embodiments, the motor assembly 100 further includes a first noise-reducing mesh plate 30. The first noise-reducing mesh plate 30 is cylindrical and has multiple mesh holes distributed thereon. The first noise-reducing mesh plate 30 is arranged on the cyclone bracket 40, and is arranged on the same side as the bracket vanes 41. For example, the first noise-reducing mesh plate 30 is arranged on the upper side of the cyclone bracket 40, is arranged around the outer side of the bracket vanes 41, and extends substantially upward from the plane where the water gathering trough 42 is located to the plane where the top ends of the bracket vanes 41 are located. When the working airflow passes through the mesh holes of the first noise-reducing mesh plate 30, the mesh holes can reduce noise of the working airflow. In addition, before passing through the mesh holes, part of the working airflow that carries water vapor condenses along the side wall (inner or outer side wall) of the first noise-reducing mesh plate; and then, the condensed water flows down along the side wall of the first noise-reducing mesh plate and flows out through the water outlets.

The motor assembly 100 further includes a second noise-reducing mesh plate 50. The second noise-reducing mesh plate 50 is arranged on a side of the cyclone bracket 40 away from the bracket vanes 41. Specifically, the second noise-reducing mesh plate 50 is arranged outside the central sleeve 47. The second noise-reducing mesh plate 50 is cylindrical. Part of the second noise-reducing mesh plate 50 extends to the upper side of the plane where the water gathering trough 42 is located, and locally forms a double-layer inner-outer structure with the first noise-reducing mesh plate 30. The second noise-reducing mesh plate 50 has multiple mesh holes distributed thereon. When the working airflow passes through the mesh holes of the second noise-reducing mesh plate 50, the mesh holes can reduce noise of the working airflow. In addition, before passing through the mesh holes, part of the working airflow that carries water vapor condenses along the side wall (inner or outer side wall) of the second noise-reducing mesh plate; and then, the condensed water flows down along the side wall of the second noise-reducing mesh plate and flows out through the water outlets.

When the working airflow flows vertically along the side wall (inner or outer side wall) of the first noise-reducing mesh plate 30 or the second noise-reducing mesh plate 50, noise is reflected and refracted by the first noise-reducing mesh plate 30 or the second noise-reducing mesh plate 50 and the bottom surface of the housing, thereby having a propagation mode of mutual superposition substantially along the axial direction of the first noise-reducing mesh plate 30 or the second noise-reducing mesh plate 50. This arrangement can compensate for axial noise reduction within the noise-reducing cavity, more effectively implementing the elimination of mid-low frequency noise of substantially 3000 Hz or lower.

In some embodiments, the diameter of the cylinder formed by the second noise-reducing mesh plate 50 is smaller than the diameter of the cylinder formed by the first noise-reducing mesh plate 30, such that the second noise-reducing mesh plate 50 and the first noise-reducing mesh plate 30 form an inner-outer two-layer structure in the radial direction. When the working airflow circulates from top to bottom, it can enter both the inner and outer sides of the second noise-reducing mesh plate 50 for circulation and noise reduction, thereby maximizing the functions of airflow circulation and noise reduction.

The working airflow generated by the motor body 20 propagates outward through the first noise-reducing mesh plate 30 and the second noise-reducing mesh plate 50. During the propagation process, the airflow generates noise of various frequencies. When noise passes through the mesh holes of the first noise-reducing mesh plate 30 and the second noise-reducing mesh plate 50, noise reduction by filtering can be achieved, i.e., by filtering out noise within a certain frequency range. The effect of noise reduction by filtering is related to the density of the holes (i.e., the number of holes per unit area), the diameter of the holes, and the thickness of the mesh plate with the holes. The higher the hole density, the higher the noise reduction frequency band; and the thicker the mesh plate with the holes, the lower the noise reduction frequency band.

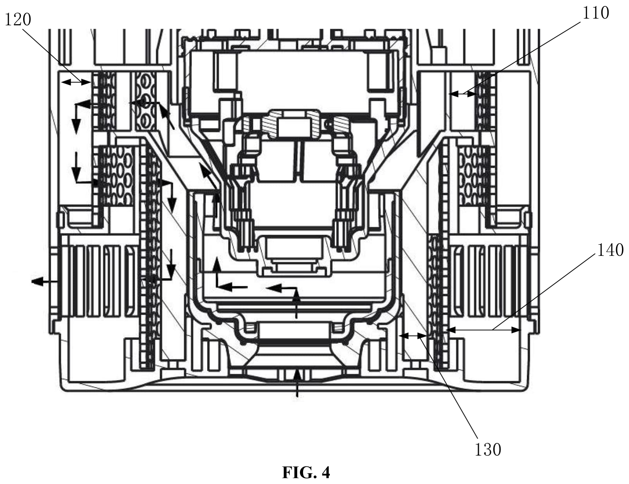

As shown in FIG. 4, before and after the noise passes through the first noise-reducing mesh plate 30 and the second noise-reducing mesh plate 50, during the reflection and refraction propagation of the noise before and after the first noise-reducing mesh plate 30 and the second noise-reducing mesh plate 50, the superposition of incident sound waves and reflected sound waves can cause noise reduction. When the superposed incident sound waves and reflected sound waves have a phase difference of 180 degrees, maximum noise reduction can be achieved. Therefore, reasonably setting the radial depth of the noise-reducing cavities can adjust the noise reduction effect.

In some embodiments, as shown in FIG. 4, the motor assembly 100 further includes a first noise-reducing cavity 110. The first noise-reducing cavity 110 is located between the outer side wall of the cyclone bracket 40 and the first noise-reducing mesh plate 30. The first noise-reducing cavity 110 is configured to reduce noise of the working airflow between the outer side wall of the cyclone bracket 40 and the first noise-reducing mesh plate 30. After being blown out from the gaps between the bracket vanes 41, the working airflow enters a space between the outer side wall of the cyclone bracket 40 and the first noise-reducing mesh plate 30. Part of the airflow not exiting through the first mesh holes is reflected back, and then flows in a direction opposite to the direction of the airflow blown out from the gaps between the bracket vanes 41, thereby forming a primary noise reduction mode.

In some embodiments, the motor assembly 100 further includes a second noise-reducing cavity 120. The second noise-reducing cavity 120 is located between the inner side wall of the housing 10 and the first noise-reducing mesh plate 30. The second noise-reducing cavity 120 is configured to reduce noise of the working airflow between the inner side wall of the housing 10 and the first noise-reducing mesh plate 30. After being blown out from the gaps between the bracket vanes 41, part of the working airflow passes through the first mesh holes of the first noise-reducing mesh plate 30, and enters a space between the inner side wall of the housing 10 and the first noise-reducing mesh plate 30. The working airflow is reflected by the inner side wall of the housing, and then flows in a direction opposite to the direction of the airflow blown out from the first mesh holes, thereby forming a secondary noise reduction mode.

In some embodiments, the motor assembly 100 further includes a third noise-reducing cavity 130. The third noise-reducing cavity 130 is located between the outer side wall of the cyclone bracket 40 and the second noise-reducing mesh plate 50. The third noise-reducing cavity 130 is configured to reduce noise of the working airflow between the outer side wall of the cyclone bracket 40 and the second noise-reducing mesh plate 50. The working airflow enters a space between the outer side wall of the cyclone bracket 40 and the second noise-reducing mesh plate 50; and after being reflected by the outer side wall of the cyclone bracket 40, the working airflow flows in a direction opposite to the direction of the airflow entering through the second mesh holes of the second noise-reducing mesh plate 50, thereby forming a tertiary noise reduction mode.

In some embodiments, the motor assembly 100 further includes a fourth noise-reducing cavity 140. The fourth noise-reducing cavity 140 is located between the inner side wall of the housing 10 and the second noise-reducing mesh plate 50. The fourth noise-reducing cavity 140 is configured to reduce noise of the working airflow between the inner side wall of the housing 10 and the second noise-reducing mesh plate 50. After being blown out through the second mesh holes of the second noise-reducing mesh plate 50, the working airflow enters a space between the inner side wall of the housing 10 and the second noise-reducing mesh plate 50. The working airflow is reflected by the inner side wall of the housing, and then flows in a direction opposite to the direction of the airflow blown out from the second mesh holes, thereby forming a quaternary noise reduction mode.

In summary, in the motor assembly of the present disclosure, after being spirally blown out from the cyclone bracket, the working airflow passes through one, two, three, or all four of the above noise-reducing cavities successively. In addition, the working airflow undergoes the noise reduction through the mesh holes of the first noise-reducing mesh plate or the second noise-reducing mesh plate. After multiple stages of the noise reduction, the noise generated by the working airflow can be significantly reduced.

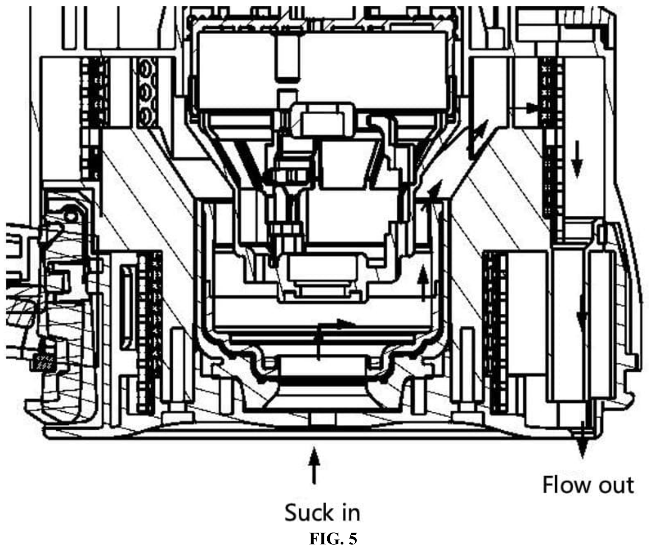

In some embodiments, FIG. 5 is a schematic structural diagram of a water flow path of a motor assembly according to some embodiments of the present disclosure. The arrows in FIG. 5 roughly indicate the flow direction of the working airflow. As shown in FIG. 5, the working airflow carrying water vapor enters from the air inlet 21 of the motor body 20. After being discharged from the motor body 20, the working airflow is spirally blown out through the gaps between the bracket vanes 41 of the cyclone bracket 40. The working airflow passes through the first mesh holes of the first noise-reducing mesh plate 30, directly blows onto the inner side wall of the housing 10, and is condensed into liquid on the inner side wall of the housing 10. The liquid is gathered by the water gathering trough 42 and guided from the water outlet holes 43 of the water gathering trough 42 to the water outlets 12 to be discharged.

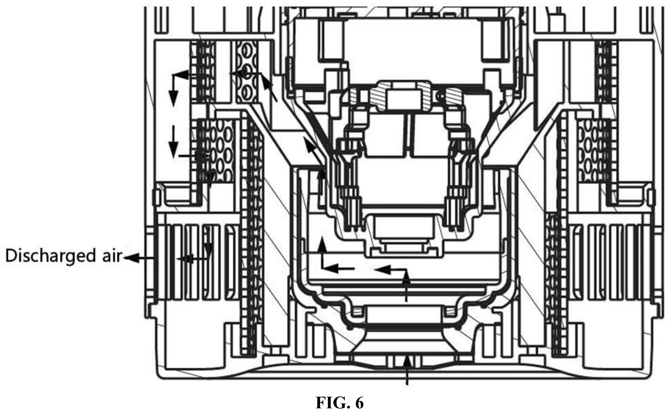

In some embodiments, FIG. 6 is a schematic structural diagram of an airflow path of a motor assembly according to some embodiments of the present disclosure. The arrows in FIG. 6 roughly indicate the flow direction of the working airflow. As shown in FIG. 6, after being discharged from the motor body 20, the working airflow carrying water vapor is spirally blown out through the gaps between the bracket vanes 41 of the cyclone bracket 40 and passes through the first noise-reducing mesh plate 30. The working airflow not condensed into liquid on the inner side wall of the housing 10 returns to the inner side of the first noise-reducing mesh plate 30, flows downward, and is discharged from the air outlets 11.

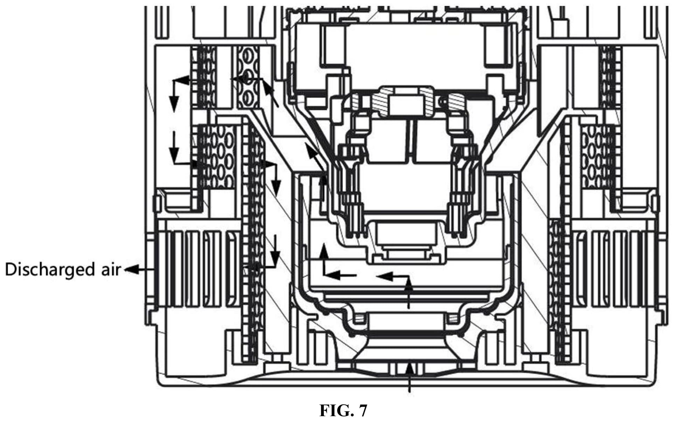

In some embodiments, FIG. 7 is a schematic structural diagram of an airflow path of a motor assembly according to some embodiments of the present disclosure. The arrows in FIG. 7 roughly indicate the flow direction of the working airflow. As shown in FIG. 7, after being discharged from the motor body 20, the working airflow carrying water vapor is spirally blown out through the gaps between the bracket vanes 41 of the cyclone bracket 40 and passes through the first noise-reducing mesh plate 30. The working airflow not condensed into liquid on the inner side wall of the housing 10 returns to the inner side of the first noise-reducing mesh plate 30 and enters the inner side of the second noise-reducing mesh plate 50, then is blown out from the second noise-reducing mesh plate 50, and is discharged from the air outlets 11.

Optionally, the above two airflow paths do not necessarily exist independently; and they may sometimes coexist in an intersecting manner to jointly form an airflow blown out from the air outlets.

The embodiments of the present disclosure provide a surface cleaning device, including the motor assembly according to any one of the above embodiments.

By arranging the cyclone bracket for the motor assembly provided by the embodiments of the present disclosure, after the motor body sucks gas containing water vapor of wastewater, water-air separation can be implemented inside the motor assembly through cyclone separation, such that most of the water vapor can condense on the inner side wall of the housing or on the noise-reducing mesh plates, and then the condensed liquid flows out from the water outlets, thereby reducing the proportion of water content in the gas discharged from the air outlets. Furthermore, noise during operation is reduced by providing the first noise-reducing mesh plate and the second noise-reducing mesh plate in the airflow path, thereby optimizing the use of the motor assembly.

Finally, it should be noted that various embodiments in the Description are described in a progressive manner, each embodiment focuses on the differences from the other embodiments, and the same or similar parts among the various embodiments may refer to one another.

The above embodiments are only used to illustrate the technical solutions of the present disclosure and are not intended to limit the present invention. Although the present disclosure has been described in detail with reference to the foregoing embodiments, those of ordinary skill in the art should understand that: they can still make modifications to the technical solutions described in the foregoing embodiments, or make equivalent substitutions to some of the technical features; and these modifications or substitutions do not deviate the nature of the corresponding technical solutions from the spirit and scope of the technical solutions of the various embodiments of the present disclosure.

## Claims

1. A motor assembly, comprising:
a housing, the housing comprising an air outlet and a water outlet;
a motor body, arranged inside the housing and configured to provide working power; and
a cyclone bracket, arranged between the motor body and the housing and configured to guide a working airflow,
wherein the cyclone bracket, the motor body and the housing are substantially coaxially arranged; and after being discharged from the motor body, the working airflow carrying water vapor is condensed into liquid on an inner side wall of the housing through the cyclone bracket and then the liquid is discharged from the water outlet, while the working airflow not condensed into the liquid is discharged from the air outlet.

2. The motor assembly according to claim 1, wherein the cyclone bracket comprises:
bracket vanes, spirally arranged around a central axis of the cyclone bracket and configured to enable the working airflow to be discharged through a gap between the bracket vanes.

3. The motor assembly according to claim 2, wherein the bracket vanes comprise a single-layer vane and a double-layer vane, and the single-layer vane and the double-layer vane are arranged alternately.

4. The motor assembly according to claim 1, wherein the cyclone bracket further comprises:
a water gathering trough, arranged around an edge of the cyclone bracket and configured to collect the liquid condensed on the inner side wall of the housing.

5. The motor assembly according to claim 4, wherein an edge of the water gathering trough is sealed against the inner side wall of the housing.

6. The motor assembly according to claim 4, wherein the cyclone bracket further comprises:
a water outlet hole, formed in the water gathering trough and configured to guide the liquid within the water gathering trough to the water outlet.

7. The motor assembly according to claim 2, further comprising:
a first noise-reducing mesh plate, arranged on the cyclone bracket and surrounding an outer side of the bracket vanes; and
a second noise-reducing mesh plate, arranged on a side of the cyclone bracket away from the bracket vanes.

8. The motor assembly according to claim 7, wherein the first noise-reducing mesh plate and the second noise-reducing mesh plate are both cylindrical, and a diameter of the second noise-reducing mesh plate is smaller than a diameter of the first noise-reducing mesh plate.

9. The motor assembly according to claim 7, further comprising:
a first noise-reducing cavity, located between an outer side wall of the cyclone bracket and the first noise-reducing mesh plate, and configured to reduce noise of the working airflow between the outer side wall of the cyclone bracket and the first noise-reducing mesh plate.

10. The motor assembly according to claim 7, further comprising:
a second noise-reducing cavity, located between the inner side wall of the housing and the first noise-reducing mesh plate, and configured to reduce noise of the working airflow between the inner side wall of the housing and the first noise-reducing mesh plate.

11. The motor assembly according to claim 7, further comprising:
a third noise-reducing cavity, located between an outer side wall of the cyclone bracket and the second noise-reducing mesh plate, and configured to reduce noise of the working airflow between the outer side wall of the cyclone bracket and the second noise -reducing mesh plate.

12. The motor assembly according to claim 7, further comprising:
a fourth noise-reducing cavity, located between the inner side wall of the housing and the second noise-reducing mesh plate, and configured to reduce noise of the working airflow between the inner side wall of the housing and the second noise-reducing mesh plate.

13. The motor assembly according to claim 1, wherein after being discharged from the motor body, the working airflow carrying the water vapor is spirally blown out through a gap between bracket vanes of the cyclone bracket and condensed into liquid on the inner side wall of the housing, and the liquid is gathered by a water gathering trough and guided from a water outlet hole of the water gathering trough to the water outlet to be discharged.

14. The motor assembly according to claim 1, wherein after being discharged from the motor body, the working airflow is spirally blown out through the cyclone bracket, passes through a first noise-reducing mesh plate, then returns to the first noise-reducing mesh plate, and is discharged from the air outlet.

15. The motor assembly according to claim 1, wherein after being discharged from the motor body, the working airflow is spirally blown out through the cyclone bracket, passes through a first noise-reducing mesh plate, then returns to an inner side of the first noise-reducing mesh plate and enters an inner side of a second noise-reducing mesh plate, then is blown out from the second noise-reducing mesh plate, and is discharged from the air outlet.

16. The motor assembly according to claim 1, wherein the air outlet is located on a side surface of the housing, and the water outlet is located on a bottom surface of the housing.

17. A surface cleaning device, comprising the motor assembly according to any one of claims 1 to 16.
